# EUROPEAN PATENT APPLICATION

(11) **EP 4 266 594 A2**
(43) Date of publication of application: **25.10.2023**
(21) Application number: 23168762.5
(22) Date of filing: 19.04.2023
(51) Int. Cl.: H04B 7/06

(54) **MULTI-LINK OPERATION ASSISTED 60GHZ BEAMFORMING TRAINING AND DATA TRANSMISSION IN WIRELESS COMMUNICATIONS**

(30) Priority: 20.04.2022 US 202263332740 P; 18.04.2023 US 202318136323
(71) Applicant: MediaTek Inc., Hsinchu City 30078 (TW)
(72) Inventor: LIU, Jianhan, San Jose, 95134 (US); HU, Shengquan, San Jose, 95134 (US); SEOK, Yongho, San Jose, 95134 (US); PARE, Jr., Thomas Edward, San Jose, 95134 (US); HSU, YungPing, 30078 Hsinchu City (TW)
(74) Representative: Hoefer & Partner Patentanwälte mbB

(57) **Abstract**

Techniques pertaining to multi-link operation, MLO, assisted 60GHz beamforming training and data transmission in wireless communications are described. An apparatus, e.g. as a 60GHz-capable MLO station, STA, performs MLO assisted 60GHz operations (810) by: -i- performing discovery and association (812); and -ii-performing either or both of beamforming training and data transmission in a 60GHz band (814).

## Description

### CROSS REFERENCE TO RELATED PATENT APPLICATION

The present disclosure is part of a non-provisional patent application claiming the priority benefit of U.S. Provisional Patent Application No. 63/332,740, filed 20 April 2022, the content of which herein being incorporated by reference in its entirety.

### TECHNICAL FIELD

The present disclosure is generally related to wireless communications and, more particularly, to multi-link operation (MLO) assisted 60GHz beamforming training and data transmission in wireless communications.

### BACKGROUND

Unless otherwise indicated herein, approaches described in this section are not prior art to the claims listed below and are not admitted as prior art by inclusion in this section.

Next-generation wireless communication, such as wireless communication in the 60GHz unlicensed spectrum band as specified in accordance with one or more Institute of Electrical and Electronics Engineers (IEEE) 802.11 specification, tends to provide a large amount of spectrum that enables high data rate in short-range communications. However, the 60GHz band tends to suffer significant propagation loss and, thus, directional transmissions (or beamforming) are needed. Moreover, discovery, association and beamforming training are complicated procedures in 60GHz communication systems based on the IEEE 802.11 ad and IEEE 802.11 ay standards. Therefore, there is a need for a solution of MLO assisted 60GHz beamforming training and data transmission in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to MLO assisted 60GHz beamforming training and data transmission in wireless communications. It is believed that aforementioned issue(s) may be avoided or otherwise alleviated by implementation of one or more of various proposed schemes described herein with respect to simplification of discovery, association and beamforming training of 60GHz communications in MLO assisted 60GHz systems. A method and an apparatus according to the invention are defined in the independent claims. The dependent claims define preferred embodiments thereof.

In one aspect, a method may involve a processor of an apparatus (e.g., as a 60GHz-capable MLO station (STA)) performing MLO assisted 60GHz operations by: (i) performing discovery and association; and (ii) performing either or both of beamforming training and data transmission in a 60GHz band.

In another aspect, an apparatus may include a transceiver configured to communicate wirelessly and a processor coupled to the transceiver. The processor may perform, via the transceiver, MLO assisted 60GHz operations by: (i) performing discovery and association; and (ii) performing either or both of beamforming training and data transmission in a 60GHz band.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a block diagram of an example communication system in accordance with an implementation of the present disclosure.
FIG. 8 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to MLO assisted 60GHz beamforming training and data transmission in wireless communications. According to the present disclosure, a number of possible solutions may be implemented separately or jointly. That is, although these possible solutions may be described below separately, two or more of these possible solutions may be implemented in one combination or another.

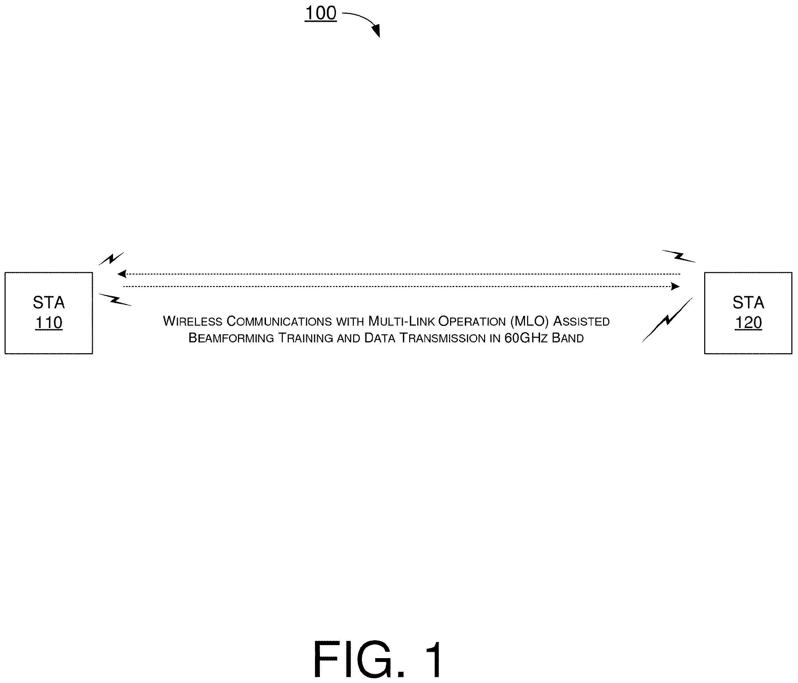

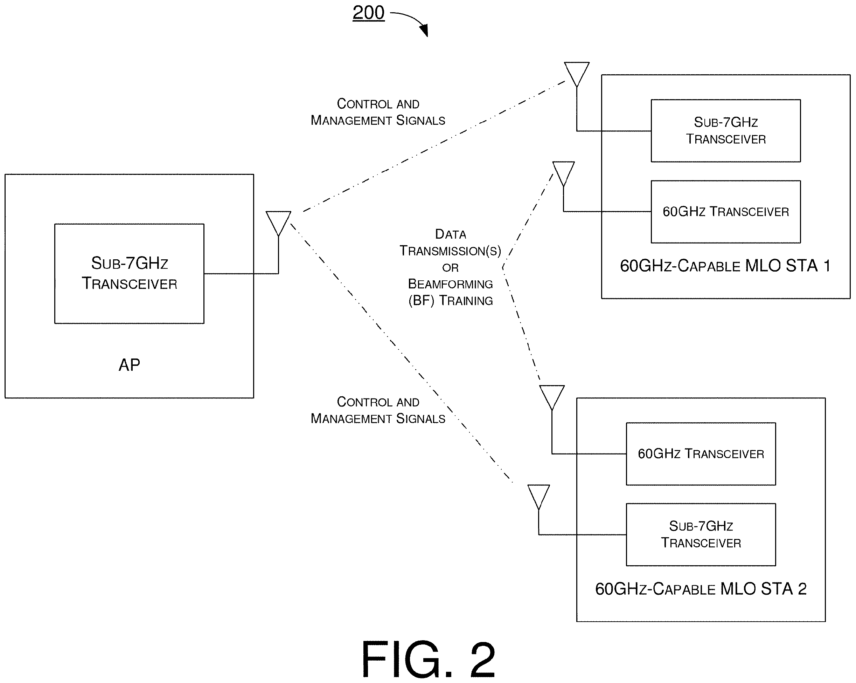

FIG. 1 illustrates an example network environment 100 in which various solutions and schemes in accordance with the present disclosure may be implemented. FIG. 2 ~ FIG. 8 illustrate examples of implementation of various proposed schemes in network environment 100 in accordance with the present disclosure. The following description of various proposed schemes is provided with reference to FIG. 1 ~ FIG. 8.

Referring to FIG. 1, network environment 100 may involve at least a STA 110 communicating wirelessly with a STA 120. Each of STA 110 and STA 120 may be a non-access point (non-AP) STA or, alternatively, either of STA 110 and STA 120 may function as an access point (AP) STA. Each of STA 110 and STA 120 may be a 60GHz-capable MLO STA. In some cases, STA 110 and STA 120 may be associated with a basic service set (BSS) in accordance with one or more IEEE 802.11 standards (e.g., IEEE 802.11be and future-developed standards). Each of STA 110 and STA 120 may be configured to communicate with each other by utilizing the techniques pertaining to MLO assisted 60GHz beamforming training and data transmission in wireless communications in accordance with various proposed schemes described below, with each of STA 110 and STA 120 functioning as an AP, a 60GHz-capable MLO STA, a beamformer or a beamformee, respectively, in each of the illustrative and non-limiting examples shown in FIG. 2 ~ FIG. 6. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

FIG. 2 illustrates an example scenario 200 with respect to MLO 60GHz systems under a proposed scheme in accordance with the present disclosure. In scenario 200, an AP and a 60GHz-capable MLO STA may use one or more sub-7GHz bands (e.g., 2.4GHz, 5GHz and/or 6GHZ) to associate with each other. As 60GHz communications may be within a very short range, in scenario 200, the AP may not be able to communicate with the STAs in the 60GHz band. Moreover, as discovery and association of 60GHz-capable MLO STAs need to be done via one or more sub-7GHz bands with MLO, each of the 60GHz-capable MLO STAs needs to report its one or more 60GHz capabilities to the AP. Under the proposed scheme, the AP may set up a 60GHz operation period for 60GHz data transmissions or beamforming training among the group of 60GHz-capable MLO STAs. Also, each of the 60GHz-capable MLO STAs may transmit its request(s) of 60GHz data transmissions or beamforming training to the AP. Accordingly, transmissions and/or beamforming training may be done in the 60GHz band during the 60GHz operation period. It is noteworthy that signal exchange over sub-7GHz bands may or may not be necessary during the 60GHz operation period.

Referring to FIG. 2, an AP and each of 60GHz-capable MLO STA1 and 60GHz-capable MLO STA2 may perform discovery and association (e.g., by transmitting and/or receiving control and management signals therebetween) in a sub-7GHz band (e.g., 2.4GHz, 5GHz or 6GHz). For instance, each of STA1 and STA2 may report or otherwise indicate its one or more 60GHz capabilities to the AP, and each of STA1 and STA2 may transmit request(s) for 60GHz data transmission and/or beamforming training to the AP. Accordingly, the AP may set up a 60GHz operation period during which STA1 and STA2 may perform, in the 60GHz band, data transmission(s) and/or beamforming training (which may or may not require any signal exchange between STA1 and STA2 over one or more sub-7GHz bands).

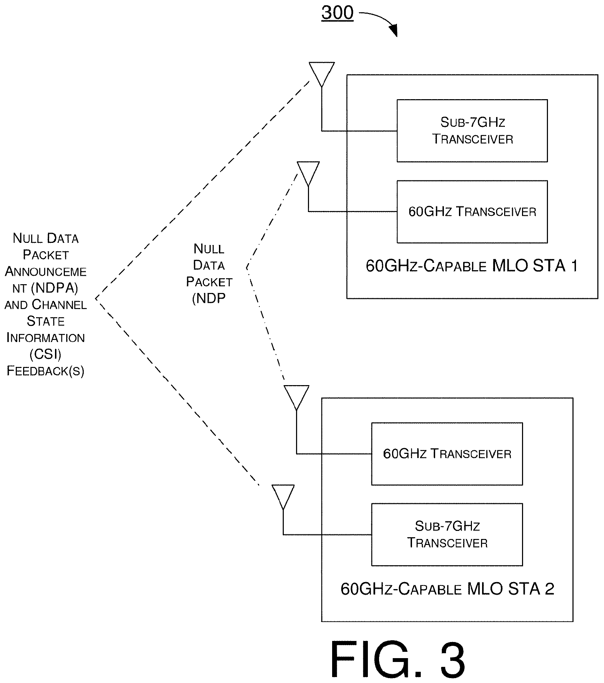

FIG. 3 illustrates an example scenario 300 with respect to MLO assisted 60GHz beamforming training under a proposed scheme in accordance with the present disclosure. Under the proposed scheme, a sub-7GHz link may be utilized to assist 60GHz beamforming training, as the sub-7Ghz link may have a longer range than a 60GHz link. For instance, a null data packet announcement (NDPA) may be transmitted in a sub-7GHz band (e.g., 2.4GHz, 5GHz or 6GHz) over the sub-7GHz link. Moreover, under the proposed scheme, pre-beamformed (e.g., using predefined beambook(s) or sector(s)) null data packets (NDPs) may be transmitted in the 60GHz band. It is noteworthy that precoded NDPs may need to be applied to enhance the range of 60GHz beamforming training. Furthermore, under the proposed scheme, the sub-7GHz link may be utilized to exchange beamforming training results and signaling. For instance, a sector identifier (ID) or beambook ID and/or channel state information (CSI) may be fed back via the sub-7GHz link.

Referring to FIG. 3, between two 60GHz-capable MLO STAs (e.g., STA1 and STA2), a sub-7GHz link may be utilized to assist 60GHz beamforming training. For instance, the sub-7GHz link may be utilized by STA1 and STA2 to exchange beamforming training results and signaling (e.g., sector ID, beambook ID and/or CSI as feedbacks), while pre-beamformed NDPs (e.g., using predefined beambook(s) or sector(s)) may be transmitted between STA1 and STA2 in the 60GHz band as part of MLO assisted 60GHz beamforming training.

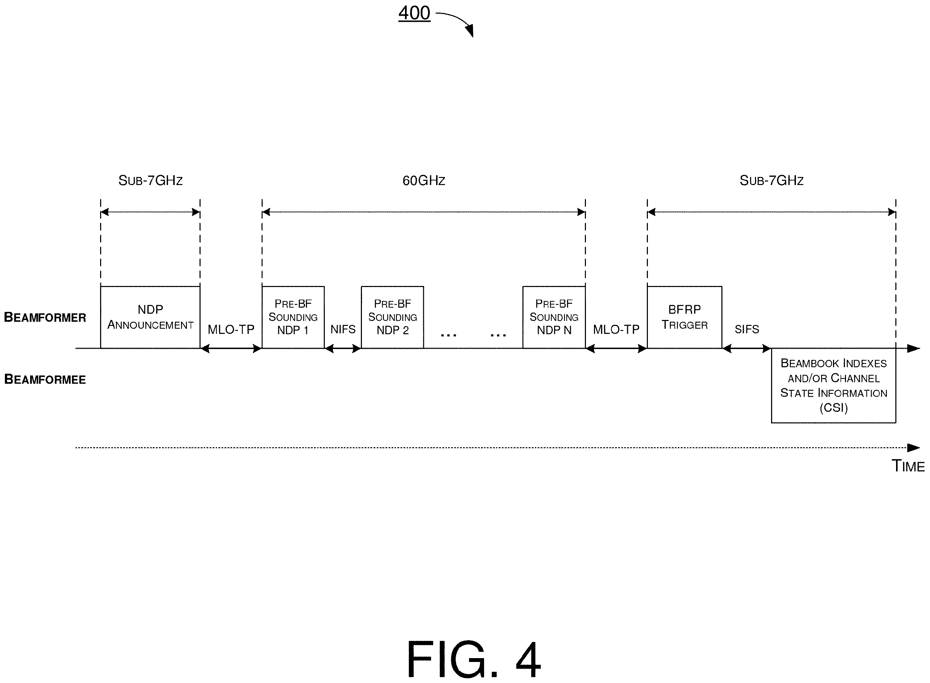

FIG. 4 illustrates an example scenario 400 with respect to trigger-based MLO assisted 60GHz beamforming training, which is initiated by a beamformer, under a proposed scheme in accordance with the present disclosure. In scenario 400, the MLO assisted 60GHz beamforming training may be triggered by the beamformer, and thus such beamforming training may be regarded as forward link beamforming training. Under the proposed scheme, an NDPA may be transmitted in a sub 7GHz band by the beamformer. The interval between sub-7GHz and 60GHz transmissions may be herein referred to as a MLO-transmission period (MLO-TP), and the MLO-TP may be much longer than a short inter-frame spacing (SIFS). Under the proposed scheme, a plurality of sequential pre-beamformed (pre-BF) sounding NDPs may be transmitted in the 60GHz band by the beamformer. The interval between pre-sounding NDPs may be herein referred to as a NDP inter-frame spacing (NIFS), and the NIFS may be much shorter than the SIFS. Under the proposed scheme, pre-BF sounding NDPs may be beamformed with different beamform codewords. For instance, a pre-BF sounding NDP *n* may be beamformed with an *n^{th}* codeword in a predefined beambook. Each codeword in the predefined beambook may be indicated by its index in the beambook. Under the proposed scheme, feedbacks and a beamforming report poll (BFRP) trigger may be transmitted in the sub-7GHz band by the beamformee. Additionally, the best K beambook indexes and/or the corresponding CSI may be fed back using the sub-7GHz band. The CSI may be in a compressed format similar to the compressed beamforming feedback as defined in the IEEE 802.1 1ax/be standards.

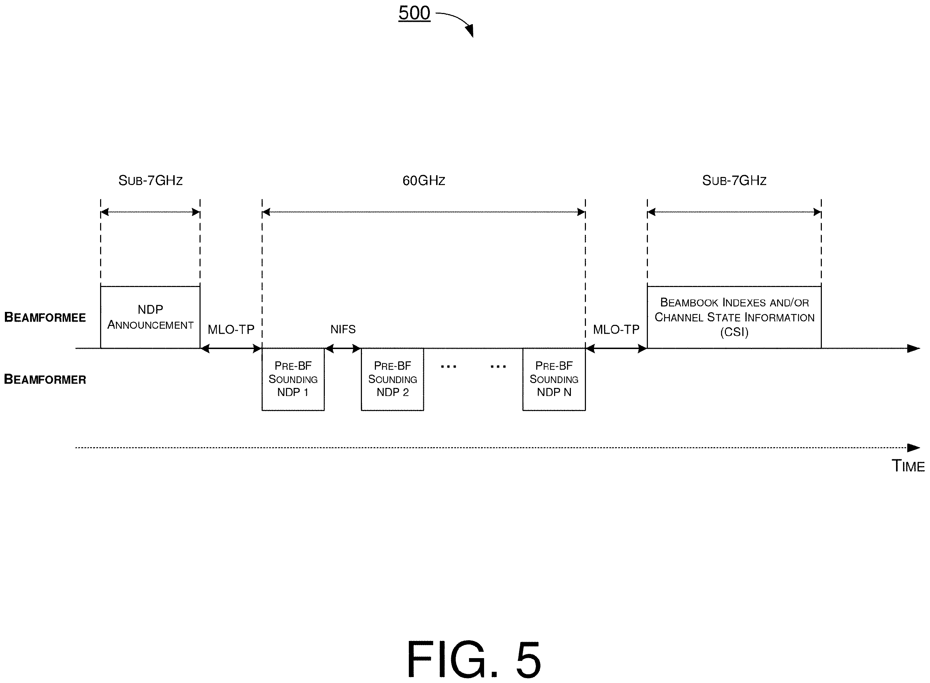

FIG. 5 illustrates an example scenario 500 with respect to trigger-based MLO assisted 60GHz beamforming training, which is initiated by a beamformee, under a proposed scheme in accordance with the present disclosure. In scenario 500, the MLO assisted 60GHz beamforming training may be triggered by the beamformee, and thus such beamforming training may be regarded as reversed link beamforming training. Under the proposed scheme, an NDPA may be transmitted in a sub-7GHz band (e.g., 2.4GHz, 5GHz or 6GHz) by the beamformee. The interval between sub-7GHz and 60GHz transmissions may be herein referred to as a MLO-TP, and the MLO-TP may be much longer than a SIFS. Under the proposed scheme, a plurality of sequential pre-BF sounding NDPs may be transmitted in the 60GHz band by the beamformer. The interval between pre-sounding NDPs may be herein referred to as a NIFS, and the NIFS may be much shorter than the SIFS. Under the proposed scheme, pre-BF sounding NDPs may be beamformed with different beamform codewords. For instance, a pre-BF sounding NDP *n* may be beamformed with an *n^{th}* codeword in a predefined beambook. Each codeword in the predefined beambook may be indicated by its index in the beambook. Under the proposed scheme, feedbacks and a BFRP trigger may be transmitted in the sub-7GHz band by the beamformee. Additionally, the best K beambook indexes and/or the corresponding CSI may be fed back using the sub-7GHz band. The CSI may be in a compressed format similar to the compressed beamforming feedback as defined in the IEEE 802.11 ax/be standards.

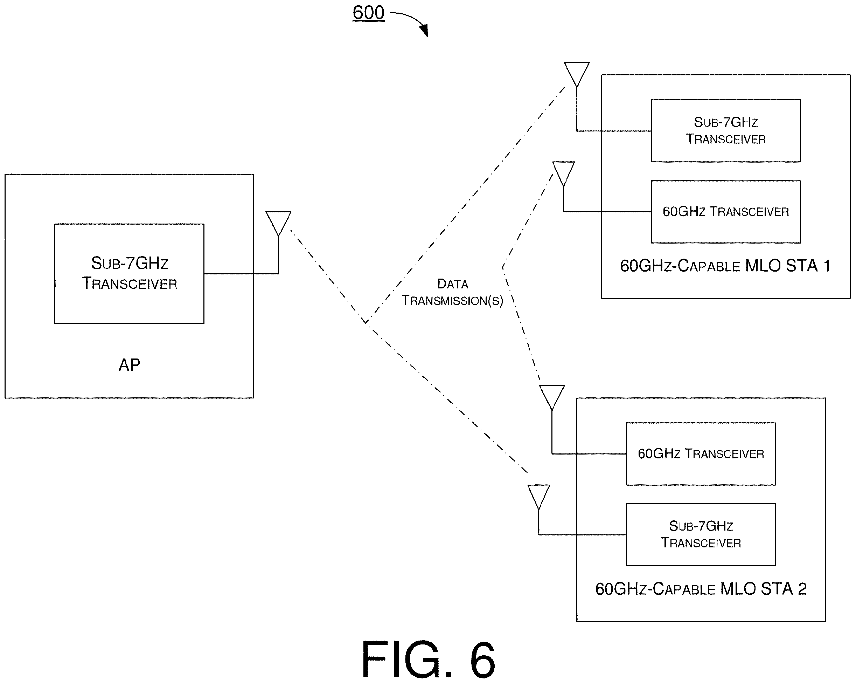

FIG. 6 illustrates an example scenario 600 with respect to MLO assisted 60GHz data transmissions under a proposed scheme in accordance with the present disclosure. Under the proposed scheme, after forward link and reversed link beamforming training, 60GHz beamforming may be set up between 60GHz-capable MLO STA pairs. For instance, data transmissions may be performed in the 60GHz band with a beamformed link between 60GHz-capable MLO STA pairs. Under the proposed scheme, 60GHz-capable MLO STAs may use one or more sub-7GHz bands (e.g., 2.4GHz, 5GHz and/or 6GHz) to coordinate 60GHz data transmissions. For instance, a 60GHz transmission period may be set up via a sub-7GHz link. Moreover, sub-7GHz link may also be utilized as a part of data transmission using MLO.

Referring to FIG. 6, after the forward link and reversed link beamforming training such as those shown in FIG. 4 and FIG. 5, 60GHz beamforming may be set up between 60GHz-capable MLO STA1 and 60GHz-capable MLO STA2. Accordingly, data transmissions may be performed over a 60GHz link in the 60GHz band with a beamformed link between STA1 and STA2. Moreover, a sub-7GHz link may be utilized by STA1 and STA2 to coordinate data transmissions in the 60GHz band. For instance, a 60GHz transmission period may be negotiated, coordinated or otherwise set up between STA1 and STA2 by utilizing the sub-7GHz band. Furthermore, the sub-7GHz band may also be utilized in data transmissions (along with the 60GHz link) as part of MLO.

### Illustrative Implementations

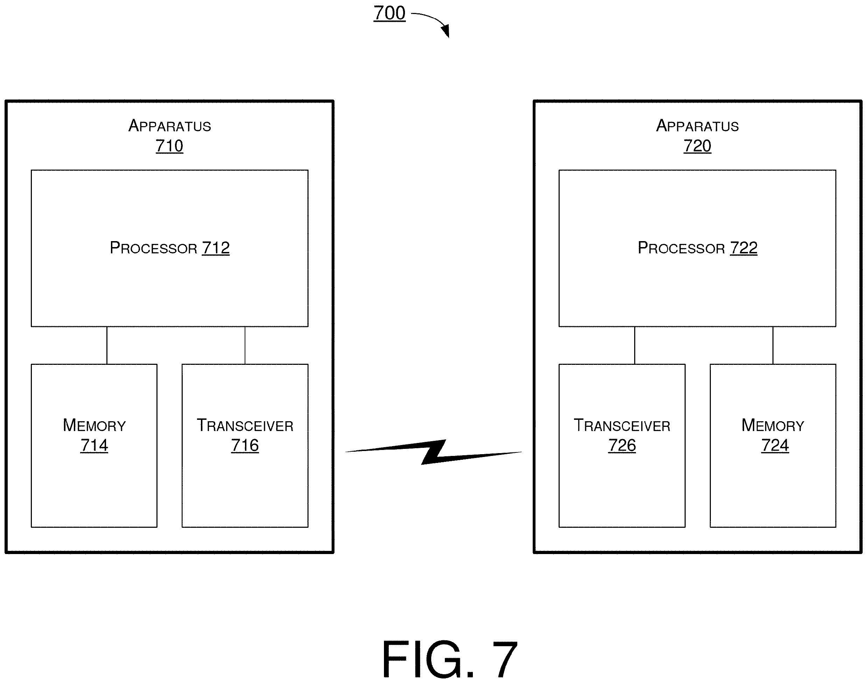

FIG. 7 illustrates an example system 700 having at least an example apparatus 710 and an example apparatus 720 in accordance with an implementation of the present disclosure. Each of apparatus 710 and apparatus 720 may perform various functions to implement schemes, techniques, processes and methods described herein pertaining to MLO assisted 60GHz beamforming training and data transmission in wireless communications, including the various schemes described above with respect to various proposed designs, concepts, schemes, systems and methods described above as well as processes described below. For instance, apparatus 710 may be implemented in STA 110 and apparatus 720 may be implemented in STA 120, or vice versa.

Each of apparatus 710 and apparatus 720 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 710 and apparatus 720 may be implemented in a smartphone, a smart watch, a personal digital assistant, a digital camera, or a computing equipment such as a tablet computer, a laptop computer or a notebook computer. Each of apparatus 710 and apparatus 720 may also be a part of a machine type apparatus, which may be an IoT apparatus such as an immobile or a stationary apparatus, a home apparatus, a wire communication apparatus or a computing apparatus. For instance, each of apparatus 710 and apparatus 720 may be implemented in a smart thermostat, a smart fridge, a smart door lock, a wireless speaker or a home control center. When implemented in or as a network apparatus, apparatus 710 and/or apparatus 720 may be implemented in a network node, such as an AP in a WLAN.

In some implementations, each of apparatus 710 and apparatus 720 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 710 and apparatus 720 may be implemented in or as a STA or an AP. Each of apparatus 710 and apparatus 720 may include at least some of those components shown in FIG. 7 such as a processor 712 and a processor 722, respectively, for example. Each of apparatus 710 and apparatus 720 may further include one or more other components not pertinent to the proposed scheme of the present disclosure (e.g., internal power supply, display device and/or user interface device), and, thus, such component(s) of apparatus 710 and apparatus 720 are neither shown in FIG. 7 nor described below in the interest of simplicity and brevity.

In one aspect, each of processor 712 and processor 722 may be implemented in the form of one or more single-core processors, one or more multi-core processors, one or more RISC processors or one or more CISC processors. That is, even though a singular term "a processor" is used herein to refer to processor 712 and processor 722, each of processor 712 and processor 722 may include multiple processors in some implementations and a single processor in other implementations in accordance with the present disclosure. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 712 and processor 722 is a special-purpose machine specifically designed, arranged and configured to perform specific tasks including those pertaining to MLO assisted 60GHz beamforming training and data transmission in wireless communications in accordance with various implementations of the present disclosure.

In some implementations, apparatus 710 may also include a transceiver 716 coupled to processor 712. Transceiver 716 may include a transmitter capable of wirelessly transmitting and a receiver capable of wirelessly receiving data. In some implementations, apparatus 720 may also include a transceiver 726 coupled to processor 722. Transceiver 726 may include a transmitter capable of wirelessly transmitting and a receiver capable of wirelessly receiving data. It is noteworthy that, although transceiver 716 and transceiver 726 are illustrated as being external to and separate from processor 712 and processor 722, respectively, in some implementations, transceiver 716 may be an integral part of processor 712 as a system on chip (SoC), and transceiver 726 may be an integral part of processor 722 as a SoC.

In some implementations, apparatus 710 may further include a memory 714 coupled to processor 712 and capable of being accessed by processor 712 and storing data therein. In some implementations, apparatus 720 may further include a memory 724 coupled to processor 722 and capable of being accessed by processor 722 and storing data therein. Each of memory 714 and memory 724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 714 and memory 724 may include a type of read-only memory (ROM) such as mask ROM, programmable ROM (PROM), erasable programmable ROM (EPROM) and/or electrically erasable programmable ROM (EEPROM). Alternatively, or additionally, each of memory 714 and memory 724 may include a type of non-volatile random-access memory (NVRAM) such as flash memory, solid-state memory, ferroelectric RAM (FeRAM), magnetoresistive RAM (MRAM) and/or phase-change memory.

Each of apparatus 710 and apparatus 720 may be a communication entity capable of communicating with each other using various proposed schemes in accordance with the present disclosure. For illustrative purposes and without limitation, a description of capabilities of apparatus 710, as STA 110, and apparatus 720, as STA 120, is provided below. It is noteworthy that, although a detailed description of capabilities, functionalities and/or technical features of apparatus 720 is provided below, the same may be applied to apparatus 710 although a detailed description thereof is not provided solely in the interest of brevity. It is also noteworthy that, although the example implementations described below are provided in the context of WLAN, the same may be implemented in other types of networks.

Under various proposed schemes pertaining to MLO assisted 60GHz beamforming training and data transmission in wireless communications in accordance with the present disclosure, with apparatus 710 implemented in or as STA 110 and apparatus 720 implemented in or as STA 120 in network environment 100, processor 712 of apparatus 710 may perform, via transceiver 716, performing, by a processor of an apparatus, MLO assisted 60GHz operations. For instance, processor 712 may perform discovery and association. Moreover, processor 712 may perform either or both of beamforming training and data transmission in a 60GHz band.

In some implementations, in performing the discovery and association, processor 712 may exchange control and management signals with an AP via one or more sub-7GHz bands. In some implementations, the one or more sub-7GHz bands may include one or more of a 2.4GHz band, a 5GHz band and a 6GHz band.

In some implementations, in exchanging the control and management signals with the AP, processor 712 may perform certain operations. For instance, processor 712 may report one or more 60GHz capabilities to the AP. Additionally, processor 712 may transmit one or more requests for either or both of the beamforming training and the data transmission to the AP. In some implementations, in performing either or both of the beamforming training and the data transmission, processor 712 may perform either or both of the beamforming training and the data transmission during a 60GHz operation period set up by the AP.

In some implementations, in performing the beamforming training, processor 712 may perform certain operations. For instance, processor 712 may transmit one or more pre-beamformed NDPs in the 60GHz band. Moreover, processor 712 may exchange beamforming training results and signaling via a sub-7GHz link. In some implementations, in exchanging the beamforming training results and signaling, processor 712 may feedback one or more of a sector ID, beambook ID and CSI.

In some implementations, in performing the beamforming training, processor 712 may perform a forward link beamforming training as a beamformer. For instance, processor 712 may transmit an NDPA in a sub-7GHz band. Additionally, processor 712 may transmit one or more pre-beamformed sounding NDPs in the 60GHz band. Moreover, processor 712 may transmit a BFRP trigger in the sub-7GHz band. Furthermore, processor 712 may receive either or both of one or more beambook indexes and CSI from a beamformee in the sub-7GHz band. In some implementations, a first interval between the NDPA transmitted in the sub-7GHz band and a beginning of the one or more pre-beamformed sounding NDPs transmitted in the 60GHz may be an MLO-TP. Moreover, a second interval between every two adjacent pre-beamformed sounding NDPs of the one or more pre-beamformed sounding NDPs may be an NIFS. Additionally, a third interval between an end of the one or more pre-beamformed sounding NDPs transmitted in the 60GHz and the BFRP trigger transmitted in the sub-7GHz band may be the MLO-TP. Furthermore, a fourth interval between the BFRP trigger and either or both of the one or more beambook indexes and CSI may be a SIFS. In such cases, the MLO-TP may be greater than the SIFS, which may be greater than the NIFS.

In some implementations, in performing the beamforming training, processor 712 may perform a reversed link beamforming training as a beamformee. For instance, processor 712 may transmit an NDPA in a sub-7GHz band. Additionally, processor 712 may receive one or more pre-beamformed sounding NDPs in the 60GHz band. Moreover, processor 712 may transmit either or both of one or more beambook indexes and CSI from a beamformee in the sub-7GHz band. In some implementations, a first interval between the NDPA transmitted in the sub-7GHz band and a beginning of the one or more pre-beamformed sounding NDPs received in the 60GHz may be an MLO-TP. Moreover, a second interval between every two adjacent pre-beamformed sounding NDPs of the one or more pre-beamformed sounding NDPs may be an NIFS. Furthermore, a third interval between an end of the one or more pre-beamformed sounding NDPs received in the 60GHz and either or both of the one or more beambook indexes and CSI transmitted in the sub-7GHz band may be the MLO-TP, with the MLO-TP being greater than the NIFS.

In some implementations, in performing the data transmission, processor 712 may perform the data transmission over a beamformed link in the 60GHz band after a forward link beamforming training and a reversed link beamforming training. Alternatively, or additionally, in performing the data transmission, processor 712 may perform the data transmission during a 60GHz transmission period that is set up by using a sub-7GHz link. Alternatively, or additionally, in performing the data transmission, processor 712 may perform the data transmission via a 60GHz link and the sub-7GHz link.

### Illustrative Processes

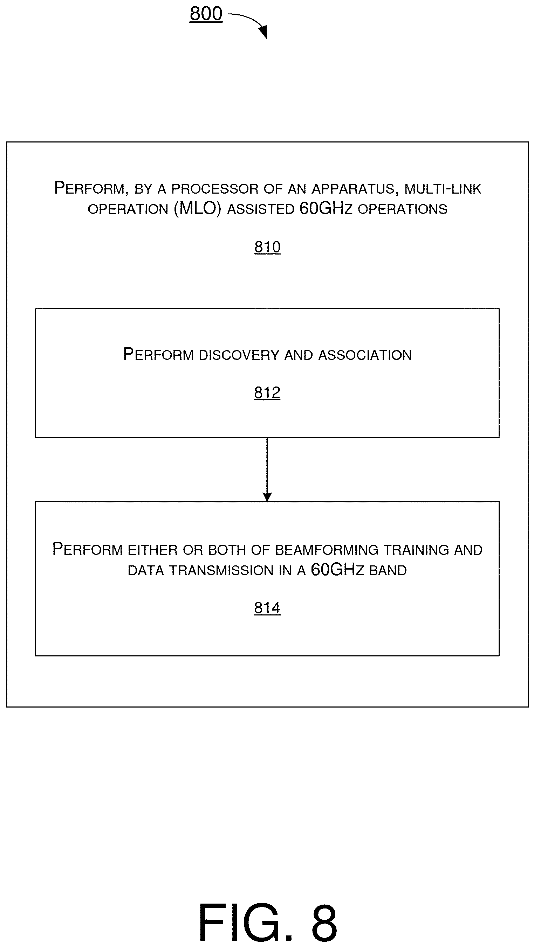

FIG. 8 illustrates an example process 800 in accordance with an implementation of the present disclosure. Process 800 may represent an aspect of implementing various proposed designs, concepts, schemes, systems and methods described above. More specifically, process 800 may represent an aspect of the proposed concepts and schemes pertaining to MLO assisted 60GHz beamforming training and data transmission in wireless communications in accordance with the present disclosure. Process 800 may include one or more operations, actions, or functions as illustrated by one or more of blocks 810 as well as sub-blocks 812 and 814. Although illustrated as discrete blocks, various blocks of process 800 may be divided into additional blocks, combined into fewer blocks, or eliminated, depending on the desired implementation. Moreover, the blocks/sub-blocks of process 800 may be executed in the order shown in FIG. 8 or, alternatively in a different order. Furthermore, one or more of the blocks/sub-blocks of process 800 may be executed repeatedly or iteratively. Process 800 may be implemented by or in apparatus 710 and apparatus 720 as well as any variations thereof. Solely for illustrative purposes and without limiting the scope, process 800 is described below in the context of apparatus 710 implemented in or as STA 110 functioning as a non-AP STA and apparatus 720 implemented in or as STA 120 functioning as an AP STA of a wireless network such as a WLAN in network environment 100 in accordance with one or more of IEEE 802.11 standards. Process 800 may begin at block 810.

At 810, process 800 may involve processor 712 of apparatus 710 performing, via transceiver 716, performing, by a processor of an apparatus, MLO assisted 60GHz operations, which may be represented by 812 and 814.

At 812, process 800 may involve processor 712 performing discovery and association. Process 800 may proceed from 812 to 814.

At 814, process 800 may involve processor 712 performing either or both of beamforming training and data transmission in a 60GHz band.

In some implementations, in performing the discovery and association, process 800 may involve processor 712 exchanging control and management signals with an AP via one or more sub-7GHz bands. In some implementations, the one or more sub-7GHz bands may include one or more of a 2.4GHz band, a 5GHz band and a 6GHz band.

In some implementations, in exchanging the control and management signals with the AP, process 800 may involve processor 712 performing certain operations. For instance, process 800 may involve processor 712 reporting one or more 60GHz capabilities to the AP. Additionally, process 800 may involve processor 712 transmitting one or more requests for either or both of the beamforming training and the data transmission to the AP. In some implementations, in performing either or both of the beamforming training and the data transmission, process 800 may involve processor 712 performing either or both of the beamforming training and the data transmission during a 60GHz operation period set up by the AP.

In some implementations, in performing the beamforming training, process 800 may involve processor 712 performing certain operations. For instance, process 800 may involve processor 712 transmitting one or more pre-beamformed NDPs in the 60GHz band. Moreover, process 800 may involve processor 712 exchanging beamforming training results and signaling via a sub-7GHz link. In some implementations, in exchanging the beamforming training results and signaling, process 800 may involve processor 712 feedbacking back one or more of a sector ID, beambook ID and CSI.

In some implementations, in performing the beamforming training, process 800 may involve processor 712 performing a forward link beamforming training as a beamformer. For instance, process 800 may involve processor 712 transmitting an NDPA in a sub-7GHz band. Additionally, process 800 may involve processor 712 transmitting one or more pre-beamformed sounding NDPs in the 60GHz band. Moreover, process 800 may involve processor 712 transmitting a BFRP trigger in the sub-7GHz band. Furthermore, process 800 may involve processor 712 receiving either or both of one or more beambook indexes and CSI from a beamformee in the sub-7GHz band. In some implementations, a first interval between the NDPA transmitted in the sub-7GHz band and a beginning of the one or more pre-beamformed sounding NDPs transmitted in the 60GHz may be an MLO-TP. Moreover, a second interval between every two adjacent pre-beamformed sounding NDPs of the one or more pre-beamformed sounding NDPs may be an NIFS. Additionally, a third interval between an end of the one or more pre-beamformed sounding NDPs transmitted in the 60GHz and the BFRP trigger transmitted in the sub-7GHz band may be the MLO-TP. Furthermore, a fourth interval between the BFRP trigger and either or both of the one or more beambook indexes and CSI may be a SIFS. In such cases, the MLO-TP may be greater than the SIFS, which may be greater than the NIFS.

In some implementations, in performing the beamforming training, process 800 may involve processor 712 performing a reversed link beamforming training as a beamformee. For instance, process 800 may involve processor 712 transmitting an NDPA in a sub-7GHz band. Additionally, process 800 may involve processor 712 receiving one or more pre-beamformed sounding NDPs in the 60GHz band. Moreover, process 800 may involve processor 712 transmitting either or both of one or more beambook indexes and CSI from a beamformee in the sub-7GHz band. In some implementations, a first interval between the NDPA transmitted in the sub-7GHz band and a beginning of the one or more pre-beamformed sounding NDPs received in the 60GHz may be an MLO-TP. Moreover, a second interval between every two adjacent pre-beamformed sounding NDPs of the one or more pre-beamformed sounding NDPs may be an NIFS. Furthermore, a third interval between an end of the one or more pre-beamformed sounding NDPs received in the 60GHz and either or both of the one or more beambook indexes and CSI transmitted in the sub-7GHz band may be the MLO-TP, with the MLO-TP being greater than the NIFS.

In some implementations, in performing the data transmission, process 800 may involve processor 712 performing the data transmission over a beamformed link in the 60GHz band after a forward link beamforming training and a reversed link beamforming training. Alternatively, or additionally, in performing the data transmission, process 800 may involve processor 712 performing the data transmission during a 60GHz transmission period that is set up by using a sub-7GHz link. Alternatively, or additionally, in performing the data transmission, process 800 may involve processor 712 performing the data transmission via a 60GHz link and the sub-7GHz link.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
performing, by a processor of an apparatus, multi-link operation, in the following also referred to as MLO, assisted 60GHz operations by (810):
performing discovery and association (812); and
performing either or both of beamforming training and data transmission in a 60GHz band (814).

2. The method of Claim 1, wherein the performing of the discovery and association comprises exchanging control and management signals with an access point, in the following also referred to as AP, via one or more sub-7GHz bands.

3. The method of Claim 2, wherein the one or more sub-7GHz bands comprise one or more of a 2.4GHz band, a 5GHz band and a 6GHz band.

4. The method of Claim 2 or 3, wherein the exchanging of the control and management signals with the AP comprises:
reporting one or more 60GHz capabilities to the AP; and
transmitting one or more requests for either or both of the beamforming training and the data transmission to the AP.

5. The method of Claim 4, wherein the performing of either or both of the beamforming training and the data transmission comprises performing either or both of the beamforming training and the data transmission during a 60GHz operation period set up by the AP.

6. The method of any one of Claims 1 to 5, wherein the performing of the beamforming training comprises:
transmitting one or more pre-beamformed null data packets, in the following also referred to as NDPs, in the 60GHz band; and
exchanging beamforming training results and signaling via a sub-7GHz link.

7. The method of Claim 6, wherein the exchanging of the beamforming training results and signaling comprises feedbacking back one or more of a sector identifier, in the following also referred to as ID, beambook ID and channel state information, in the following also referred to as CSI.

8. The method of any one of Claims 1 to 7, wherein the performing of the beamforming training comprises performing a forward link beamforming training as a beamformer.

9. The method of Claim 8, wherein the performing of the forward link beamforming training comprises:
transmitting a null data packet announcement, in the following also referred to as NDPA, in a sub-7GHz band;
transmitting one or more pre-beamformed sounding NDPs in the 60GHz band;
transmitting a beamforming report poll, in the following also referred to as BFRP, trigger in the sub-7GHz band; and
receiving either or both of one or more beambook indexes and CSI from a beamformee in the sub-7GHz band.

10. The method of Claim 9, wherein a first interval between the NDPA transmitted in the sub-7GHz band and a beginning of the one or more pre-beamformed sounding NDPs transmitted in the 60GHz is a MLO-transmission period, in the following also referred to as MLO-TP, wherein a second interval between every two adjacent pre-beamformed sounding NDPs of the one or more pre-beamformed sounding NDPs is a NDP inter-frame spacing, in the following also referred to as NIFS, wherein a third interval between an end of the one or more pre-beamformed sounding NDPs transmitted in the 60GHz and the BFRP trigger transmitted in the sub-7GHz band is the MLO-TP, wherein a fourth interval between the BFRP trigger and either or both of the one or more beambook indexes and CSI is a short inter-frame spacing, in the following also referred to as SIFS, wherein the MLO-TP is greater than the SIFS, and wherein the SIFS is greater than the NIFS.

11. The method of any one of Claims 1 to 10, wherein the performing of the beamforming training comprises performing a reversed link beamforming training as a beamformee.

12. The method of Claim 11, wherein the performing of the reversed link beamforming training comprises:
transmitting a NDPA in a sub-7GHz band;
receiving one or more pre-beamformed sounding NDPs in the 60GHz band; and
transmitting either or both of one or more beambook indexes and CSI from a beamformee in the sub-7GHz band.

13. The method of Claim 12, wherein a first interval between the NDPA transmitted in the sub-7GHz band and a beginning of the one or more pre-beamformed sounding NDPs received in the 60GHz is a MLO-TP, wherein a second interval between every two adjacent pre-beamformed sounding NDPs of the one or more pre-beamformed sounding NDPs is a NIFS, wherein a third interval between an end of the one or more pre-beamformed sounding NDPs received in the 60GHz and either or both of the one or more beambook indexes and CSI transmitted in the sub-7GHz band is the MLO-TP, wherein the MLO-TP is greater than the NIFS.

14. The method of Claim 1, wherein the performing of the data transmission comprises performing the data transmission over a beamformed link in the 60GHz band after a forward link beamforming training and a reversed link beamforming training; and/or
wherein the performing of the data transmission comprises performing the data transmission during a 60GHz transmission period that is set up by using a sub-7GHz link,
wherein preferably the performing of the data transmission further comprises performing the data transmission via a 60GHz link and the sub-7GHz link.

15. An apparatus (710), comprising:
a transceiver (716) configured to communicate wirelessly; and
a processor (712) coupled to the transceiver (716) and configured to perform, via the transceiver (716), multi-link operation, in the following also referred to as MLO, assisted 60GHz operations by the method steps as defined in any one of the preceding claims.
